# DEMANDE DE BREVET EUROPEEN

(11) **EP 3 121 915 A1**
(43) Date de publication de la demande: **25.01.2017**
(21) Numéro de dépôt: 16305927.2
(22) Date de dépôt: 19.07.2016
(51) Int. Cl.: H02G 1/00, H02G 3/08, H02G 3/12

(54) **APPAREILLAGE ET BOÎTE ÉLECTRIQUES À ENCASTRER DANS UNE PAROI**

(30) Priorité: 24.07.2015 FR 1557112
(71) Demandeur: Legrand France, 87000 Limoges (FR); Legrand SNC, 87000 Limoges (FR)
(72) Inventeur: MAZIERE, Laurent, 87220 FEYTIAT (FR); CAILLE, Jean-Loup, 87510 Peyrilhac (FR); LONGEVILLE, Jérome, 87350 Panazol (FR); CHAUMENY, Jean-Luc, 87590 Saint Just Le Martel (FR)
(74) Mandataire: Orsini, Fabienne

(57) **Abrégé**

L'invention concerne un ensemble à encastrer dans une cavité (2) pratiquée dans une paroi (1), comportant :
- une boîte électrique (10) qui présente une paroi latérale (11) bordée, à l'avant, par un épaulement (12),
- un appareillage électrique (30) à fixer dans la boîte électrique, et
- une plaque d'habillage (20) à fixer audit appareillage électrique et qui présente un bord périphérique extérieur (22).

Selon l'invention, l'ensemble comporte également une rehausse (50) qui présente :
- une ouverture principale (51) à engager sur la paroi latérale de la boîte électrique, par l'arrière, en appui contre l'épaulement de la boîte électrique, et
- une face latérale périphérique extérieure (52) adaptée à prolonger continument le bord périphérique extérieur de la plaque d'habillage.

## Description

### DOMAINE TECHNIQUE AUQUEL SE RAPPORTE L'INVENTION

La présente invention concerne de manière générale l'installation d'un appareillage électrique en position encastrée dans une paroi au moyen d'une boîte électrique.

Elle concerne plus particulièrement un ensemble à encastrer dans une cavité pratiquée dans une paroi, comportant :
- une boîte électrique qui présente une paroi latérale qui est centrée autour d'un axe central et qui est bordée, à l'avant, par un épaulement extérieur,
- un appareillage électrique qui comporte des moyens de fixation à la boîte électrique et qui comprend à l'avant une partie fonctionnelle, et
- une plaque d'habillage qui comporte des moyens de fixation audit appareillage électrique, qui présente une ouverture d'accès adaptée à laisser accès à la partie fonctionnelle de l'appareillage électrique, et qui présente un bord périphérique extérieur qui s'étend en hauteur suivant ledit axe central.

### ARRIERE-PLAN TECHNOLOGIQUE

Généralement, pour installer un appareillage électrique dans une paroi, on dégage une cavité dans cette paroi, on y installe une boîte électrique, puis on engage l'appareillage dans cette boîte électrique. Une plaque d'habillage est ensuite rapportée sur l'ensemble à des fins esthétique et de protection électrique.

Pour faciliter l'installation de la boîte électrique de telle manière que son bord avant affleure la face avant de la paroi, cette boîte électrique est généralement bordée, à l'avant, par un épaulement destiné à s'appuyer contre la paroi.

Il existe différentes gammes de boîtes, de profondeurs différentes.

Lorsque l'installateur dispose d'une cavité de profondeur suffisante, il est alors d'usage d'utiliser une boîte profonde. Les fils électriques issus du réseau électrique local sont en effet rigides si bien qu'utiliser une boîte profonde facilite notamment l'opération consistant à rapporter l'appareillage électrique câblé dans la boîte électrique.

Lorsque la paroi est peu épaisse, la cavité pratiquée dans cette paroi présente nécessairement une profondeur réduite, ce qui empêche l'usage d'une boîte profonde. L'installateur utilise alors une boîte de profondeur réduite.

On comprend que l'utilisation d'une telle boîte complique la tâche de l'installateur, notamment lorsqu'il s'agit d'y rapporter l'appareillage électrique câblé.

Un autre inconvénient est que certains appareillages électriques volumineux ne peuvent alors plus être utilisés puisqu'ils nécessitent l'utilisation de boîtes profondes.

### OBJET DE L'INVENTION

Afin de remédier aux inconvénients précités de l'état de la technique, la présente invention propose une solution permettant d'utiliser une boîte profonde, quelle que soit l'épaisseur de la paroi dans laquelle est rapportée la boîte.

Plus particulièrement, on propose selon l'invention un ensemble tel que défini dans l'introduction, dans lequel il est prévu une rehausse qui présente :
- une ouverture principale dont les dimensions permettent d'engager la rehausse sur la paroi latérale de la boîte électrique, par l'arrière, en appui contre l'épaulement de la boîte électrique, et
- une face latérale périphérique extérieure adaptée à prolonger continument suivant ledit axe central le bord périphérique extérieur de la plaque d'habillage.

Ainsi, grâce à l'invention, la rehausse présente une fonction de cale permettant, lorsque cela s'avère nécessaire, de surélever la boîte électrique.

De cette manière, il est possible d'utiliser une boîte électrique plus profonde que la cavité dans laquelle cette boîte doit être rapportée.

D'autres caractéristiques avantageuses et non limitatives de l'ensemble conforme à l'invention sont les suivantes :
- l'ouverture principale de la rehausse présente des dimensions égales, au jeu de montage près, aux dimensions correspondantes de la paroi latérale de la boîte électrique ;
- la paroi latérale de la boîte électrique présente une forme cylindrique autour de l'axe central ;
- le bord périphérique extérieur de la plaque d'habillage et la face latérale périphérique extérieure de la rehausse présentent des contours de formes carrées ou rectangulaires ;
- le bord périphérique extérieur de la plaque d'habillage et la face latérale périphérique extérieure de la rehausse présentent des contours de formes circulaires ou oblongues ;
- la rehausse porte une couronne qui borde à l'arrière son ouverture principale ;
- la rehausse est moulée d'une seule pièce ;
- la rehausse est réalisée dans une matière identique à celle de la plaque d'habillage ; et
- l'ouverture principale de la rehausse est délimitée par une paroi intérieure, la face latérale périphérique extérieure de la rehausse est délimitée par une paroi extérieure, et la rehausse comporte des nervures de rigidification qui relient la paroi intérieure à la paroi extérieure.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un premier mode de réalisation d'un ensemble conforme à l'invention ;
- les figures 2 et 3 sont des vues illustrant le montage de l'ensemble de la figure 1 dans une paroi ;
- les figures 4 et 5 sont des vues schématiques en perspective de l'ensemble de la figure 1 une fois installé dans la paroi, cette installation étant réalisée sans utiliser de rehausse sur la figure 4 et en utilisant une rehausse sur la figure 5 ;
- la figure 6 est une vue schématique en perspective éclatée d'un second mode de réalisation d'un ensemble conforme à l'invention ;
- les figures 7 et 8 sont des vues schématiques en perspective de l'ensemble de la figure 6 une fois installé dans une paroi, cette installation étant réalisée sans utiliser de rehausse sur la figure 7 et en utilisant une rehausse sur la figure 8 ;
- les figures 9 et 10 sont des vues schématiques en perspective d'une variante de réalisation de la rehausse de l'ensemble de la figure 1, vue sous deux angles différents ; et
- la figure 11 est une vue schématique en coupe de la rehausse de la figure 9 installée sur une paroi.

En préliminaire on notera que les éléments identiques ou similaires des différentes variantes de réalisation de l'invention représentées sur les différentes figures seront, dans la mesure du possible, référencés par les mêmes signes de référence et ne seront pas décrits à chaque fois.

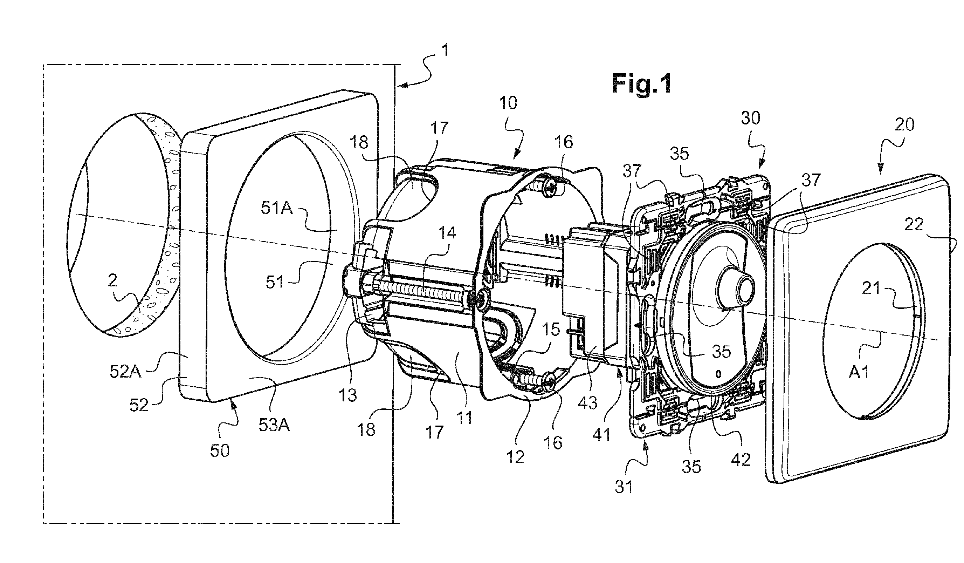

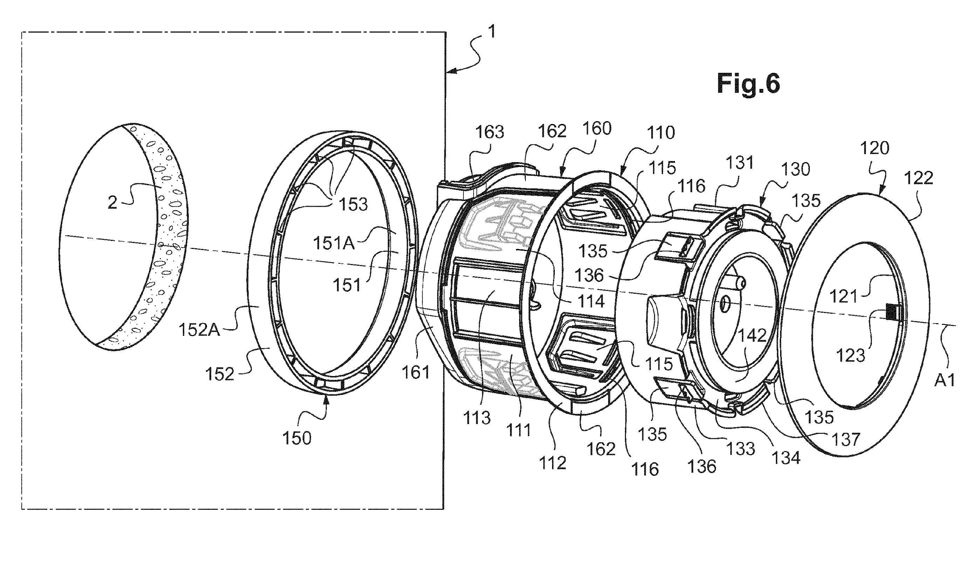

Sur les figures 1 et 6, on a représenté deux modes de réalisation d'un ensemble comportant une boîte électrique 10 ; 110 à encastrer dans une paroi, un appareillage électrique 30 ; 130 à fixer dans la boîte électrique 10 ; 110, et une plaque d'habillage 20 ; 120 à rapporter sur l'appareillage électrique 30 ; 130 à des fins esthétique et de protection électrique.

Dans ces deux modes de réalisation, la boîte électrique 10 ; 110 est du type à encastrer dans une cavité pratiquée dans une cloison creuse.

On rappelle à ce sujet que, de manière connue, une telle cloison creuse est généralement composée d'une ossature métallique (formée de montants verticaux et de rails horizontaux non représentés) et de panneaux de plâtre rapportés sur l'une au moins des deux faces de l'ossature métallique.

La cavité pratiquée dans cette cloison creuse 1 pour accueillir la boîte électrique 10 ; 110 est alors simplement formée par une ouverture circulaire 2 réalisée à la scie cloche dans l'un des panneaux de plâtre.

Dans la description, les termes « avant » et « arrière » seront utilisés par rapport à la direction du regard de l'installateur de l'ensemble dans la cloison creuse 1. Ainsi, les termes avant et arrière désigneront respectivement le lieu tourné vers l'extérieur de la cloison creuse et le lieu tourné vers l'intérieur de cette cloison creuse.

En variante, il pourrait s'agir non pas d'une cloison creuse mais d'une cloison pleine, par exemple d'une cloison maçonnée, auquel cas la boîte électrique utilisée présenterait une forme différente.

Dans les deux modes de réalisation de l'invention respectivement représentés sur les figures 1 à 5 et 6 à 8, la boîte électrique 10 ; 110 présente une paroi latérale 11 ; 111 qui est centrée autour d'un axe central A1, qui est fermée à l'arrière, qui est ouverte à l'avant pour recevoir l'appareillage électrique 30 ; 130 et qui est bordée à l'avant par un épaulement 12 ; 112 en saillie vers l'extérieur de la paroi latérale.

Cet épaulement 12; 112 est conçu pour venir en appui contre le panneau de plâtre, autour de l'ouverture circulaire 2 pratiqué dans celui-ci.

Dans ces deux modes, l'appareillage électrique 30 ; 130 est conçu pour être rapporté dans la boîte électrique 10; 110 et il est prévu pour offrir une fonction électrique quelconque (prise de courant, interrupteur, ...). Il comporte à cet effet des moyens de fixation 35 ; 135 à la boîte électrique 10 ; 110 et une partie fonctionnelle 42 ; 142 dont la forme dépend de la fonction électrique offerte.

Dans ces deux modes également, la plaque d'habillage 20; 120 comporte des moyens de fixation 125 à l'appareillage électrique 30 ; 130 et elle présente une ouverture d'accès 21 ; 121 adaptée à laisser accès à la partie fonctionnelle 42 ; 142 de l'appareillage électrique 30 ; 130.

Cette plaque d'habillage 20 ; 120 est conçue pour recouvrir l'ensemble de l'appareillage électrique 30 ; 130, à l'exception de sa partie fonctionnelle 42 ; 142. Elle s'étend ainsi sur une largeur supérieure à celle de l'appareillage électrique 30; 130. Elle présente un bord périphérique extérieur 22; 122 qui s'étend en hauteur suivant l'axe central A1.

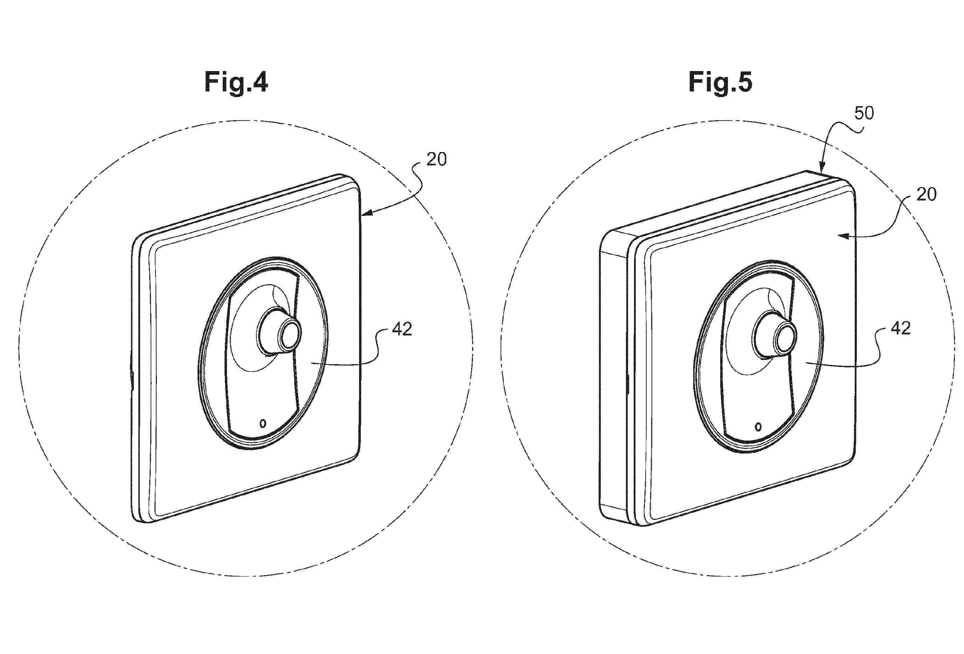

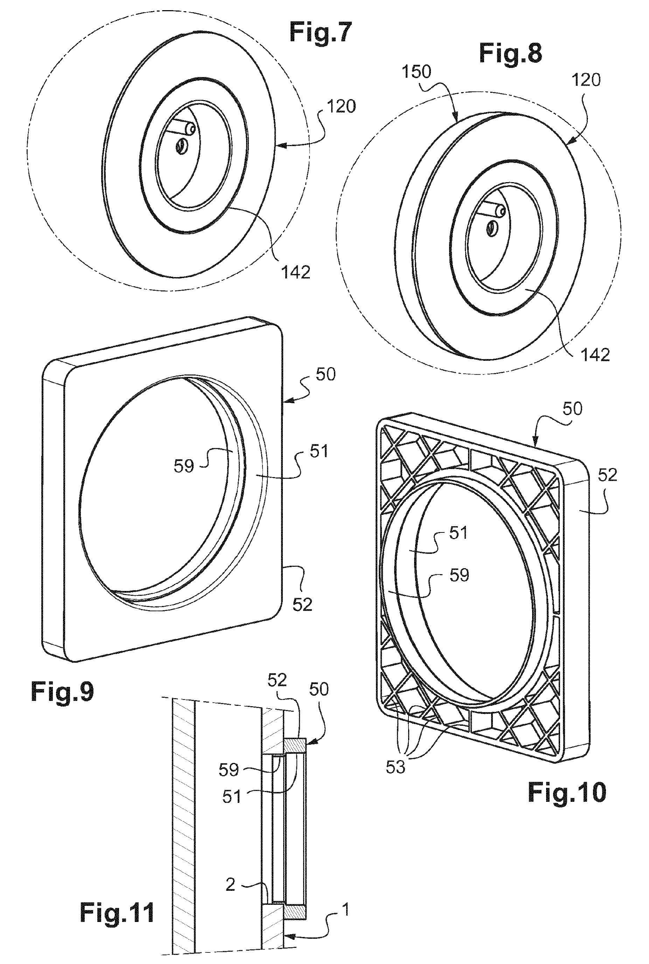

Comme le montrent les figures 4 et 7, ces trois éléments peuvent être rapportés directement dans la cloison creuse 1, de manière à faire peu saillie à l'avant de celle-ci.

Toutefois, dans le cas où la cloison creuse présente une épaisseur réduite et que, de ce fait, il n'est pas possible d'y rapporter directement la boîte électrique 10; 110 (sauf à ce que l'épaulement de cette boîte ne puisse pas s'appuyer contre la face avant du panneau de plâtre), la présente invention propose d'utiliser une rehausse 50 ; 150.

Selon une caractéristique particulièrement avantageuse de l'invention, cette rehausse 50; 150 présente une ouverture principale 51 ; 151 pour le passage de la paroi latérale 11 ; 111 de la boîte électrique 10 ; 110, et une face latérale périphérique extérieure 52 ; 152 adaptée à prolonger continument suivant l'axe central A1 le bord périphérique extérieur 22 ; 122 de la plaque d'habillage 20 ; 120.

Les dimensions de l'ouverture principale 51 ; 151 de la rehausse sont choisies de telle sorte que cette rehausse 50 ; 150 puisse venir en appui par sa face avant contre la face arrière de l'épaulement 12 ; 112 de la boîte électrique 10 ; 110.

Préférentiellement, l'ouverture principale 51 ; 151 de la rehausse 50; 150 présente des dimensions égales, au jeu de montage près, aux dimensions correspondantes de la paroi latérale 11 de la boîte électrique 10.

Plus précisément, l'ouverture principale 51 ; 151 de la rehausse 50 ; 150 étant délimitée par une paroi intérieure 51A ; 151A, cette paroi intérieure 51A; 151A est prévue pour s'appliquer contre la paroi latérale 11 ; 111 de la boîte électrique 10 ; 110 lorsque la rehausse est en appui contre l'épaulement 12 ; 112 de la boîte électrique 10 ; 110.

De cette manière, une fois dans cette position, les mobilités de la rehausse 50; 150 par rapport à la boîte électrique 10; 110 dans le plan orthogonal à l'axe central A1 sont bloquées.

Dans le premier mode de réalisation représenté sur les figures 1 à 5, la boîte électrique 10 et l'appareillage électrique 30 sont du type à installer dans la cloison creuse 1 au moyen d'outils (par vissage).

Comme le montre la figure 1, dans ce mode de réalisation, la paroi latérale 11 de boîte d'encastrement 10 présente une forme générale cylindrique de révolution autour de l'axe central A1.

L'épaulement 12 de la boîte électrique 10 longe ici extérieurement l'ensemble du bord de l'ouverture avant de la paroi latérale 11. Il est ainsi adapté à prendre appui contre la face avant du panneau de plâtre, tout autour de l'ouverture circulaire 2, afin de bloquer la boîte électrique 10 vers l'arrière.

Pour la bloquer vers l'avant, la boîte électrique 10 comprend deux griffes 13 qui interviennent en position diamétralement opposée sur la face externe de la paroi latérale 11, et qui, sous le contrôle de vis 14 débouchant à l'avant de la boîte électrique 10, sont adaptées à venir s'accrocher à la face arrière du panneau de plâtre.

Sur la figure 1, ces griffes 13 sont représentées en position rétractée dans des cavités prévues dans le fond de la boîte électrique 10. Dans cette position, il est possible de rapporter facilement la boîte électrique 10 dans l'ouverture circulaire 2 pratiquée dans le panneau de plâtre 1, sans être gêné par ces griffes 13. Puis, lorsque l'installateur manoeuvre les vis 14, les griffes 13 sont prévues pour pivoter de 180 degrés afin de se déployer en saillie de la paroi latérale 11 de la boîte, puis pour remonter vers l'avant jusqu'à venir en appui contre la face arrière du panneau de plâtre.

Pour la fixation de l'appareillage électrique 30, la paroi latérale 11 de la boîte d'encastrement 10 porte intérieurement des puits de vissage 15, dans lesquels sont vissées des vis 16. Il est ici prévu deux vis 16 en position diamétralement opposée par rapport à l'axe central A1.

Pour permettre d'engager à l'intérieur de la boîte électrique 10 une gaine de cheminement de câbles (qui loge des fils électriques issus du réseau électrique local), la boîte électrique 10 présente des ouvertures de passage 17, initialement fermées par des opercules défonçables 18.

Dans ce premier mode de réalisation, comme le montre encore la figure 1, l'appareillage électrique 30 comporte un support d'appareillage 31 et un mécanisme d'appareillage 41 bloqué dans le support d'appareillage 31.

Le mécanisme d'appareillage 41 pourrait être de tout type. Il pourrait ainsi s'agir d'un mécanisme d'interrupteur, de va-et-vient, de prise de courant, de prise réseau (RJ45), de prise de téléphone (RJ11), de voyant, ou encore de détecteur (de fumée, d'inondation, de température, de mouvement ou de lumière). Tel qu'il est représenté sur la figure 1, il s'agit ici d'un mécanisme de variateur électrique.

Il comporte un socle arrière 43 qui est globalement parallélépipédique et qui est ouvert vers l'avant. Il comporte également un enjoliveur 42 de forme circulaire qui ferme à l'avant ce socle arrière 43 et qui porte des moyens de manoeuvre permettant de régler la puissance électrique transmise par le mécanisme d'appareillage 41 (cet enjoliveur forme la « partie fonctionnelle » précitée). Il comporte enfin intérieurement des bornes électriques (non visibles sur les figures) de phase, de neutre et de phase coupée, qui sont logées dans le socle arrière 43 et qui permettent de connecter le mécanisme d'appareillage 41 au réseau électrique local.

Le support d'appareillage 31 sert quant à lui au montage du mécanisme d'appareillage 41 à l'intérieur de la boîte électrique 10. Il forme ici une pièce distincte du socle arrière 43 du mécanisme d'appareillage 41. En variante, il pourrait former une seule pièce avec celui-ci.

Ce support d'appareillage 31 se présente ici sous la forme d'un cadre plat carré dont le bord intérieur comporte des moyens d'encliquetage du mécanisme d'appareillage 41.

Il comporte par ailleurs, au centre de chacune de ses quatre branches, un orifice 35 en forme de trou de serrure propre à permettre sa fixation à la boîte électrique 10, via les vis 16.

Il comporte enfin, dans chacune de ses quatre branches, des fentes 37 propres à permettre l'accrochage de la plaque d'habillage 20.

Comme le montre la figure 1, la plaque d'habillage 20 présente une forme de cadre carré, avec une ouverture centrale 21 ici de forme circulaire.

Tandis que cette plaque d'habillage 20 est conçue pour recouvrir esthétiquement le support d'appareillage 31, l'ouverture centrale 21 est conçue pour laisser un accès à l'enjoliveur 42 du mécanisme d'appareillage 41. Cette ouverture centrale 21 présente à cet effet un diamètre égal, au jeu près, au diamètre de l'enjoliveur 42.

Cette plaque d'habillage 20 présente une forme de plaque bordée, sur l'ensemble de son contour, par un bord périphérique extérieur 22 dont la tranche est adaptée à venir s'appliquer contre le panneau de plâtre.

La face externe de ce bord périphérique extérieur 22 présente ici un contour de forme carrée (aux coins arrondis).

Cette plaque d'habillage 20 présente une face avant légèrement bombée et une face arrière à partir de laquelle s'étendent des languettes d'encliquetage adaptées à s'accrocher dans les fentes 37 prévues dans le support d'appareillage 31.

La rehausse 50 illustrée sur la figure 1 est alors prévue pour former une cale s'interposant entre le panneau de plâtre et l'épaulement 12 de la boîte électrique 10.

Etant données les formes de cette boîte électrique 10 et de la plaque d'habillage 20, l'ouverture principale 51 de la rehausse présente une forme circulaire et la face latérale périphérique extérieure 52 de la rehausse présente un contour de forme carrée (aux coins arrondis).

Plus précisément, la rehausse présente une paroi intérieure 51 A cylindrique de révolution autour de l'axe central A1 qui délimite l'ouverture 51, une paroi extérieure 52A qui est adapté à s'étendre dans le prolongement du bord périphérique extérieur 22 de la plaque d'habillage 20, et une paroi frontale 53A qui s'étend entre les bords avant des parois intérieure 51A et extérieure 52A.

La forme et les dimensions de la paroi extérieure 52A de la rehausse 50 sont ainsi telle qu'en position assemblée, la face latérale périphérique extérieure 52 se place à affleurement du bord périphérique extérieur 22 de la plaque d'habillage 20, le long de l'ensemble de son contour.

Cette paroi frontale 53A est plane.

La rehausse 50 comporte par ailleurs des nervures de rigidification 53 (visibles sur la figure 10 illustrant une variante de réalisation de la rehausse), qui relient la paroi intérieure 51A à la paroi extérieure 52A.

Cette rehausse 50 est préférentiellement réalisée d'une seule pièce par moulage d'une matière plastique isolante.

Elle est préférentiellement réalisée dans la même matière que la plaque d'habillage 20 et de la même couleur.

Elle présente une hauteur (selon l'axe central A1) supérieure à 2 millimètres, ici égale à 1 centimètre.

L'installation de l'appareillage électrique 30 dans l'ouverture circulaire 2 pratiquée dans le panneau de plâtre est alors réalisée de la manière suivante.

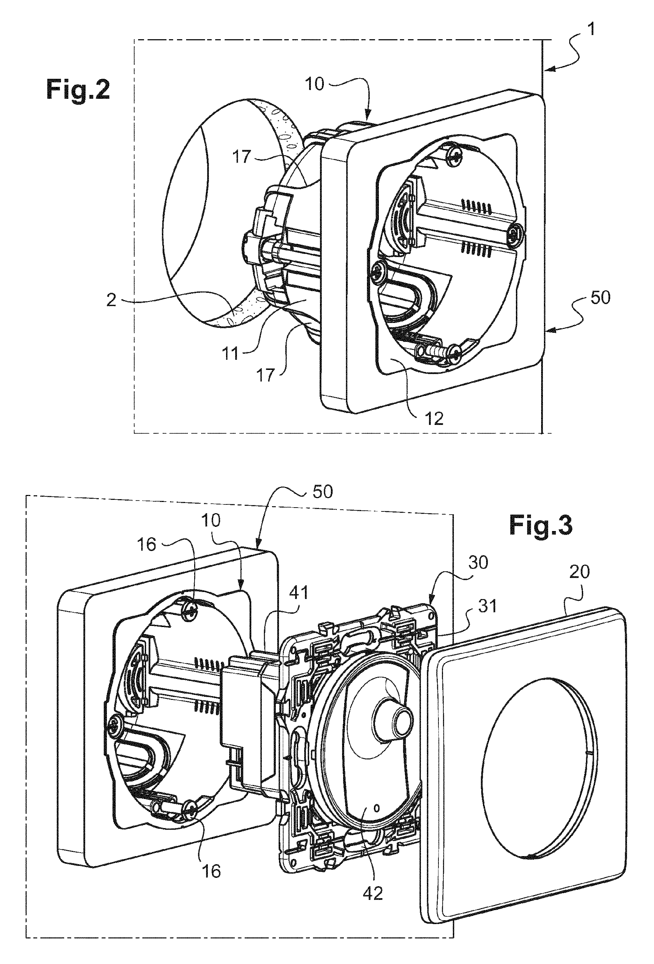

Comme le montre la figure 2, la rehausse 50 est tout d'abord engagée sur la paroi latérale 11 de la boîte électrique 10, en appui contre la face arrière de l'épaulement 12 de cette boîte.

L'extrémité libre d'une gaine de cheminement est ensuite tirée à l'extérieur de la cloison creuse 1, au travers de l'ouverture circulaire 2, de telle manière que l'installateur puisse engager les fils électriques issus de cette gaine de cheminement de câbles dans la boîte électrique 10, au travers de l'une des ouvertures d'insertion 17.

Comme le montre la figure 3, la boîte électrique 10 équipée de sa rehausse 50 est alors engagée dans l'ouverture circulaire 2 pratiquée dans le panneau de plâtre, en prenant soin que la face arrière de la rehausse 50 s'applique bien contre le panneau de plâtre. Elle y est fixée grâce aux vis 14 de manoeuvre des griffes 13.

L'installateur connecte alors les fils électriques à l'appareillage électrique 30 puis il rapporte cet appareillage dans la boîte électrique 10. Il l'y fixe au moyen des vis 16.

L'installateur rapporte ensuite la plaque d'habillage 20 à l'avant du support d'appareillage 31, de telle manière qu'elle s'y encliquette. Dans cette position, la tranche du bord périphérique extérieure 22 de la plaque d'habillage vient s'appliquer contre la rehausse 50, dans le prolongement de celle-ci (voir figure 5).

Dans le second mode de réalisation représenté sur les figures 6 à 8, la boîte électrique 110 et l'appareillage électrique 130 sont du type à installer dans la cloison creuse 1 sans outil.

Ici encore, l'appareillage électrique 130 est conçu pour offrir à l'utilisateur la fonction électrique souhaitée.

Tel qu'il est représenté sur la figure 6, cet appareillage électrique 130 se présente sous la forme d'un bloc « tout en un », adapté à être rapporté directement dans la boîte électrique 100 (sans utiliser de support d'appareillage).

Cet appareillage électrique 130 comporte un socle 131 en matériau isolant. Ce socle 131 comprend une paroi latérale 133 qui est fermée à l'avant par une paroi frontale 134 annulaire, accueillant en son centre un enjoliveur 142 (qui forme la « partie fonctionnelle » précitée). Le socle 131 délimite ainsi un espace intérieur de réception d'un mécanisme électrique.

Le mécanisme électrique logé à l'intérieur du socle 131 comporte classiquement une partie fonctionnelle servant à assurer la fonction pour laquelle le module d'appareillage a été conçu, et une partie de connexion servant à assurer sa connexion électrique au réseau électrique local.

On entend par « partie fonctionnelle » une partie qui est adaptée à accomplir une fonction qui va au-delà d'une simple connexion à des conducteurs électriques (cette connexion étant réalisée par la « partie de connexion »).

La partie fonctionnelle présente une forme adaptée à la fonction que le mécanisme électrique doit exécuter. Il s'agit ici d'une fonction de prise de courant. La partie fonctionnelle comporte alors une broche de terre, et deux alvéoles (non visibles) adaptées à recevoir deux broches de la fiche électrique.

La partie de connexion pourra quant à elle comporter des bornes automatiques ou à vis ou à perçage d'isolant, permettant de fixer et de connecter trois fils électriques issus du réseau électrique local aux broches de terre et alvéoles précitées.

Telle qu'elle apparaît sur la figure 6, la boîte électrique 110 est assemblée à un étrier de connexion 160.

Cette boîte électrique 110 est constituée d'un corps 113 réalisé dans un matériau plastique rigide (typiquement en polypropylène) et d'un revêtement 114 réalisé dans un matériau plus souple (typiquement en SEBS - acronyme anglais de «polystyrène-b-poly(éthylène-butylène)-b-polystyrène »).

La paroi latérale 111 de ce corps 113 présente une forme cylindrique de révolution autour de l'axe central A1.

Pour sa fixation dans l'ouverture circulaire 2 pratiquée dans le panneau de plâtre, le corps 113 porte l'épaulement 112 qui longe extérieurement le bord de l'extrémité avant de la paroi latérale 111 et qui est adapté à prendre appui contre la face avant du panneau de plâtre, tout autour de l'ouverture circulaire 2 qui y est pratiquée. Ainsi, cet épaulement 112 permet de bloquer la boîte électrique 110 vers l'arrière.

Pour son blocage vers l'avant, la boîte électrique 110 comporte quatre volets 115 globalement rectangulaires qui sont découpés dans des ouvertures pratiquées dans la paroi latérale 111 et qui sont régulièrement répartis autour de l'axe central A1. Chaque volet 115 présente trois bords libres et un quatrième bord, à savoir ici le bord avant, qui se raccorde au reste de la paroi latérale 111 par deux pattes formant charnière. Les volets 115 sont ainsi libres de pivoter entre une position rentrée et une position sortie.

Le revêtement 114 souple recouvre la face extérieure de chacun de ces quatre volets 115.

Au repos, les volets 115 sont en position rentrée, c'est-à-dire que leurs faces externes sont situées dans le prolongement de la face externe du reste de la paroi latérale 111 du corps 113 de la boîte électrique 110. Ces volets ne gênent donc pas l'engagement de la boîte électrique 110 au travers de l'ouverture circulaire 2 pratiquée dans le panneau de plâtre.

Ces quatre volets 115 comportent chacun, en saillie sur leurs faces intérieures, deux nervures parallèles qui forment des rampes. Ainsi, lorsque l'appareillage électrique 130 est rapporté dans la boîte électrique 110, son socle 131 appuie contre ces nervures parallèles, ce qui permet de forcer les volets 115 à se déployer en position sortie, c'est-à-dire en saillie de la face externe de la paroi latérale 111 du corps 113 de la boîte électrique 110. Dans cette position, les volets 115 s'accrochent alors à la face arrière du panneau de plâtre, ce qui bloque la boîte électrique 110 dans la cloison creuse 1.

Sur la figure 6, on observe que la boîte électrique 110 présente quatre fenêtres 116 identiques, régulièrement réparties autour de l'axe A1.

Ces fenêtres 116 présentent chacune une forme rectangulaire et elles s'étendent en longueur le long du bord avant de la paroi latérale 111 du corps 113 de la boîte électrique 110. Elles sont traversantes, en ce sens qu'elles débouchent de part et d'autre du corps 113 de la boîte électrique 110. Le revêtement 114 souple ferme toutefois les fonds de ces quatre fenêtres 116.

Ces fenêtres 116 sont conçues pour permettre l'accrochage et le réglage angulaire de l'appareillage électrique 130 dans la boîte électrique 110.

La paroi latérale 133 du socle 131 de l'appareillage électrique 130 comporte alors quatre pattes 135 globalement rectangulaires, régulièrement réparties autour de l'axe central A1. Ces quatre pattes 135 présentent trois bords libres et un quatrième bord, à savoir ici le bord arrière, qui se raccorde au reste de la paroi latérale 133 du socle 131 pour former une charnière. Au repos, chaque patte 135 s'étend dans le prolongement de la paroi latérale 133. Chaque patte 135 est alors flexible depuis sa position de repos vers une position déformée vers l'intérieur du socle 131.

Chaque patte 135 porte, du côté de son extrémité libre avant, des dents d'accrochage 136 adaptées à s'accrocher aux bords avant des fenêtres 116 de la boîte électrique 10, par encliquetage.

Le socle 131 de l'appareillage électrique 130 comporte également un trottoir périphérique 137 qui longe extérieurement sa paroi frontale et qui est adapté à venir s'appuyer contre le bord avant de la boîte électrique 110 lorsque les dents d'accrochage 136 s'accrochent aux fenêtres 116 de la boîte électrique 110.

Ainsi, l'appareillage électrique 130 peut-il être bloquée fixement dans la boîte électrique 110.

L'étrier 160 visible sur la figure 6 est quant à lui prévu pour être placé à l'arrière de la boîte électrique 110 en vue de faciliter la connexion de fils électriques issus du réseau électrique local à l'appareillage électrique 130.

Cet étrier 160, qui forme une pièce distincte de la boîte électrique 110, ne sera pas ici décrit en détail. On indiquera seulement qu'il comporte une embase circulaire 161 à partir duquel s'élèvent deux bras 162 dont les extrémités libres sont recourbées pour s'accrocher à la face avant du panneau de plâtre. Les deux bras 162 permettent de positionner l'étrier 160 sur le panneau de plâtre, avant d'y rapporter la boîte électrique 110.

L'embase circulaire 161 loge des éléments de connexion qui comprennent chacun une borne d'entrée pour la connexion de l'un des fils électriques du réseau électrique local et une borne de sortie dans laquelle peut venir se brancher une broche prévue en saillie à l'arrière de l'appareillage électrique 130. Pour cela, le fond de la boîte électrique 110 présente une ouverture de passage de ces broches.

Cet étrier 160 comporte par ailleurs une ouverture d'entrée 163 pour l'entrée des fils électriques du réseau électrique local. Cette ouverture d'entrée 163 est ici bordé par un rebord de forme particulière, permettant d'y fixer un embout (non représenté) adapté à se connecter à une gaine de cheminement de fils électriques (de type ICTA).

Comme le montre la figure 6, dans ce mode de réalisation, la plaque d'habillage 120 présente une forme annulaire, avec une ouverture centrale 121 ici de forme circulaire.

Tandis que cette plaque d'habillage 120 est conçue pour recouvrir esthétiquement l'appareillage électrique 130, l'ouverture centrale 121 est conçue pour laisser un accès à l'enjoliveur 142. Cette ouverture centrale 121 présente à cet effet un diamètre égal, au jeu près, au diamètre de l'enjoliveur 142.

Le bord périphérique extérieur 122 de la plaque d'habillage 120 présente ici un contour de forme circulaire, de diamètre supérieur à au diamètre du rebord périphérique 137 de l'appareillage électrique 130.

Cette plaque d'habillage 20 comporte, en saillie du bord de son ouverture centrale 121, des languettes d'encliquetage 123 adaptées à s'accrocher à des clips prévus sur la paroi frontale 134 du socle 131 de l'appareillage électrique 130.

La rehausse 150 illustrée sur la figure 6 est alors prévue pour former une cale s'interposant entre le panneau de plâtre et l'épaulement 112 de la boîte électrique 110.

Etant données les formes de cette boîte électrique 110 et de la plaque d'habillage 120, l'ouverture principale 151 de la rehausse présente une forme circulaire et la face latérale périphérique extérieure 152 de la rehausse 150 présente également une forme circulaire.

Plus précisément, la rehausse présente une paroi intérieure 151A cylindrique de révolution autour de l'axe central A1, qui délimite l'ouverture 151, et une paroi extérieure 152A cylindrique de révolution autour de l'axe central A1, qui porte la face latérale périphérique extérieure 152 précitée.

La rehausse 150 comporte par ailleurs des nervures de rigidification 153 qui relient la paroi intérieure 151A à la paroi extérieure 152A. Ces nervures de rigidification 153 s'étendent radialement par rapport à l'axe central A1, et sont régulièrement réparties autour de celui-ci.

Cette rehausse 150 est préférentiellement réalisée d'une seule pièce par moulage d'une matière plastique isolante.

Elle présente une hauteur (selon l'axe central A1) ici égale à 1 centimètre.

Sur les figures 9 à 11, on a représenté une variante de réalisation de la rehausse 50 décrite en référence aux figures 1 à 5.

Dans cette variante, la rehausse 50 présente une forme identique à celle représentée sur les figures 1 à 5, à ceci près qu'elle porte une couronne 59 qui borde à l'arrière son ouverture principale 51.

Alors que la paroi intérieure 51A de la rehausse 50 présente un diamètre intérieur égal à celui de l'ouverture circulaire 2 pratiquée dans le panneau de plâtre, la couronne 59 présente un diamètre extérieur égal à celui de cette même ouverture circulaire 2. De cette manière, la couronne 59 est en mesure d'être engagée (de préférence « en force ») dans l'ouverture circulaire 2.

Cette couronne 59, de hauteur comprise entre 3 et 10 millimètres, permet alors de retenir la rehausse 50 dans l'ouverture circulaire 2 avant que la boîte électrique 10 n'y soit rapportée.

La présente invention n'est nullement limitée aux modes de réalisation décrits et représentés, mais l'homme du métier saura y apporter toute variante conforme.

En particulier, on aurait pu prévoir que la boîte électrique présente une forme carrée et que l'ouverture principale de la rehausse présente une forme correspondante.

## Revendications

1. Ensemble à encastrer dans une cavité (2) pratiquée dans une paroi (1), comportant :
- une boîte électrique (10 ; 110) qui présente une paroi latérale (11 ; 111) qui est centrée autour d'un axe central (A1) et qui est bordée, à l'avant, par un épaulement (12 ; 112),
- un appareillage électrique (30; 130) qui comporte des moyens de fixation (35 ; 135) à la boîte électrique (10 ; 110) et qui comprend à l'avant une partie fonctionnelle (42 ; 142), et
- une plaque d'habillage (20 ; 120) qui comporte des moyens de fixation (125) audit appareillage électrique (30 ; 130), qui présente une ouverture d'accès (21 ; 121) adaptée à laisser accès à la partie fonctionnelle (42; 142) de l'appareillage électrique (30 ; 130), et qui présente un bord périphérique extérieur (22 ; 122) qui s'étend en hauteur suivant ledit axe central (A1),
**caractérisé en ce qu'**il comporte également une rehausse (50 ; 150) qui présente :
- une ouverture principale (51 ; 151) dont les dimensions permettent d'engager la rehausse (50; 150) sur la paroi latérale (11 ; 111) de la boîte électrique (10 ; 110), par l'arrière, en appui contre l'épaulement (12 ; 112) de la boîte électrique (10 ; 110), et
- une face latérale périphérique extérieure (52 ; 152) adaptée à prolonger continument suivant ledit axe central (A1) le bord périphérique extérieur (22 ; 122) de la plaque d'habillage (20 ; 120).

2. Ensemble selon la revendication précédente, dans lequel l'ouverture principale (51 ; 151) de la rehausse (50 ; 150) présente des dimensions égales, au jeu de montage près, aux dimensions correspondantes de la paroi latérale (11) de la boîte électrique (10).

3. Ensemble selon l'une des revendications précédentes, dans lequel la paroi latérale (11) de la boîte électrique (10) présente une forme cylindrique autour de l'axe central (A1).

4. Ensemble selon l'une des revendications 1 à 3, dans lequel le bord périphérique extérieur (22) de la plaque d'habillage (20) et la face latérale périphérique extérieure (52) de la rehausse (50) présentent des contours de formes carrées ou rectangulaires.

5. Ensemble selon l'une des revendications 1 à 3, dans lequel le bord périphérique extérieur (122) de la plaque d'habillage (120) et la face latérale périphérique extérieure (152) de la rehausse (150) présentent des contours de formes circulaires ou oblongues.

6. Ensemble selon l'une des revendications précédentes, dans lequel la rehausse (50) porte une couronne (59) qui borde à l'arrière son ouverture principale (51).

7. Ensemble selon l'une des revendications précédentes, dans lequel la rehausse (50 ; 150) est moulée d'une seule pièce.

8. Ensemble selon l'une des revendications précédentes, dans lequel la rehausse (50 ; 150) est réalisée dans une matière identique à celle de la plaque d'habillage (20 ; 120).

9. Ensemble selon l'une des revendications précédentes, dans lequel l'ouverture principale (51 ; 151) de la rehausse (50 ; 150) est délimitée par une paroi intérieure (51A ; 151 A), la face latérale périphérique extérieure (52 ; 152) de la rehausse (50 ; 150) est délimitée par une paroi extérieure (52A ; 152A), et la rehausse (50 ; 150) comporte des nervures de rigidification (53 ; 153) qui relient la paroi intérieure (51A ; 151 A) à la paroi extérieure (52A ; 152A).
